(19)

Europäisches Patentamt
European Patent Office
Office européen des brevets

(11) Veröffentlichungsnummer: **0 549 935 A2**

(12) **EUROPÄISCHE PATENTANMELDUNG**

(21) Anmeldenummer: **92121144.7**

(22) Anmeldetag: **11.12.92**

(51) Int. Cl.[5]: **C09B 33/044**, C09B 33/06, C09B 33/08, C09B 33/24, C09B 33/00, C09B 45/24

(30) Priorität: **21.12.91 DE 4142696**

(43) Veröffentlichungstag der Anmeldung: **07.07.93 Patentblatt 93/27**

(84) Benannte Vertragsstaaten: **CH DE FR GB IT LI**



(71) Anmelder: **BASF Aktiengesellschaft**
**Carl-Bosch-Strasse 38**
**W-6700 Ludwigshafen(DE)**

(72) Erfinder: **Lamm, Gunther, Dr.**
**Heinrich-Heine-Strasse 27**
**W-6733 Hassloch(DE)**
Erfinder: **Mayer, Udo, Dr.**
**Max-Slevogt-Strasse 27**
**W-6710 Frankenthal(DE)**
Erfinder: **Reichelt, Helmut, Dr.**
**Johann-Gottlieb-Fichte-Strasse 56**
**W-6730 Neustadt(DE)**
Erfinder: **Zeidler, Georg**
**Mutterstadter Strasse 7**
**W-6701 Dannstadt-Schauernheim(DE)**


(54) **Polyazofarbstoffe mit einer Diazokomponente aus Aminobenzophenonreihe.**


(57) Polyazofarbstoffe der Formel

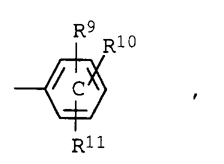

in freier Form oder als Kupfer-, Chrom-, Eisen-, Kobalt- oder Nickelkomplex, wobei p 1 bis 2 und, q 0 bis 1, bedeuten und $R^1$, $R^2$, $R^3$, $R^4$, $R^5$, $R^6$, $R^7$, $R^8$, $X^1$, $X^2$ sowie die Ringe A und B jeweils die in der Beschreibung genannte Bedeutung besitzen, sowie die Verwendung der neuen Polyazofarbstoffe zum Färben von Leder.



EP 0 549 935 A2

Die vorliegende Erfindung betrifft neue Polyazofarbstoffe der Formel I

(I)

in freier Form oder als Kupfer-, Chrom-, Eisen-, Kobalt- oder Nickelkomplex, wobei

| | |
|---|---|
| p | 1 bis 2, |
| q | 0 bis 1, |
| $X^1$ | Wasserstoff oder Hydroxysulfonyl, |
| $X^2$ | Wasserstoff, Hydroxysulfonyl, Hydroxysulfonylphenyl, Hydroxysulfonylbenzyl oder Hydroxysulfonylphenylethyl, |
| $R^1$, $R^2$ und $R^3$ | gleich oder verschieden sind und unabhängig voneinander jeweils Wasserstoff, Halogen, $C_1$-$C_{12}$-Alkyl, Cyclohexyl oder $C_1$-$C_4$-Alkoxy |
| R4 | Wasserstoff, $C_1$-$C_4$-Alkyl, $C_1$-$C_4$-Alkoxy oder Chlor, |
| $R^5$ und $R^6$ | gleich oder verschieden sind und unabhängig voneinander jeweils Hydroxy oder Amino, |
| $R^7$ | Wasserstoff, $C_1$-$C_4$-Alkyl, Halogen, Nitro, Hydroxysulfonyl, Sulfamoyl, $C_1$-$C_4$-Mono- oder -Dialkylsulfamoyl, Phenylsulfamoyl oder $C_1$-$C_4$-Alkylsulfonyl, |
| $R^8$ | Wasserstoff, Halogen, Nitro oder Hydroxysulfonyl und |
| Y | einen Rest der Formel |

,

worin

$R^9$ für Wasserstoff, Hydroxy, Halogen, Nitro oder Hydroxysulfonyl,

$R^{10}$ für Wasserstoff, Halogen, Nitro oder Hydroxysulfonyl und

$R^{11}$ für Wasserstoff, $C_1$-$C_4$-Alkyl, $C_1$-$C_4$-Alkoxy oder Hydroxysulfonyl stehen, bedeuten,

der Ring A gegebenenfalls benzoanelliert ist und ein benzoanellierter Ring A durch $C_2H_4$ verbrückt sein kann und die Ringe B und C jeweils durch einen gegebenenfalls durch Nitro oder Hydroxysulfonyl substituierten Benzoring anelliert sein können,

sowie die Verwendung der neuen Farbstoffe zum Färben von Leder.

In der CH-A-571 599, DE-A-2 024 047, DE-A-2 162 419 sowie EP-A-45 868 sind bereits Polyazofarbstoffe beschrieben, die denen der Formel I ähnlich sind. Anstelle der Carbonylgruppe weisen sie jedoch eine Iminogruppe auf. Aus der EP-A-355 601 sind weiterhin ähnliche Polyazofarbstoffe bekannt, die anstelle der Carbonylgruppe eine schwefelhaltiges Brückenglied aufweisen.

Aufgabe der vorliegenden Erfindung war es, neue Polyazofarbstoffe bereitzustellen, die leicht zugänglich sein und vorteilhafte anwendungstechnische Eigenschaften besitzen sollten.

Demgemäß wurden die Farbstoffe der obengenannten Formel I gefunden.

Alle in den erfindungsgemäßen Verbindungen auftretenden Alkylgruppen können sowohl geradkettig als auch verzweigt sein.

Reste $R^1$, $R^2$, $R^3$, $R^4$ und $R^{11}$ sind z.B. Methoxy, Ethoxy, Propoxy, Isopropoxy, Butoxy, Isobutoxy oder sec-Butoxy.

Reste $R^1$, $R^2$, $R^3$, $R^4$ und $R^{11}$ sind weiterhin, ebenso wie der Rest $R^7$, z.B. Methyl, Ethyl, Propyl, Isopropyl, Butyl, Isobutyl oder sec-Butyl.

Reste $R^1$, $R^2$, $R^3$ und $R^7$ sind weiterhin, ebenso wie die Reste $R^8$, $R^9$ und $R^{10}$, z.B. Fluor, Chlor oder Brom. Dabei ist Chlor oder Brom bevorzugt.

Reste $R^1$, $R^2$ und $R^3$ sind weiterhin z.B. Pentyl, Isopentyl, Neopentyl, tert-Pentyl, Hexyl, 2-Methylpentyl, Heptyl, 2-Methylhexyl, Octyl, Isooctyl, 2-Ethylhexyl, Nonyl, Isononyl, Decyl, Isodecyl, Undecyl oder Dodecyl (die obigen Bezeichnungen Isooctyl, Isononyl und Isodecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

$R^7$ bedeutet weiterhin z.B. Mono- oder Dimethylsulfamoyl, Mono- oder Diethylsulfamoyl, Mono- oder Dipropylsulfamoyl, Mono- oder Diisopropylsulfamoyl, Mono- oder Dibutylsulfamoyl, N-Methyl-N-ethylsulfamoyl, Methylsulfonyl, Ethylsulfonyl, Propylsulfonyl, Isopropylsulfonyl oder Butylsulfonyl.

Die Indices p und q können jeweils auch Bruchteile von ganzen Zahlen darstellen. Dies bedeutet, daß in diesem Fall Mischungen von Polyazofarbstoffen vorliegen.

Es versteht sich, daß für den Fall, daß in den Polyazofarbstoffen der Formel I eine oder mehrere Hydroxysulfonylgruppen enthalten sind, auch deren Salze von der Erfindung mit umfaßt werden sollen.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes $C_1$-$C_{20}$-Alkyl zu verstehen, das durch Hydroxylgruppen substituiert und/oder durch 1 bis 4 Sauerstoffatome in Etherfunktion unterbrochen sein kann.

Bevorzugt sind Polyazofarbstoffe der Formel I, in der

| | |
|---|---|
| q | 0, |
| $X^1$ | Wasserstoff oder Hydroxysulfonyl, |
| $X^2$ | Wasserstoff oder Hydroxysulfonyl, |
| $R^1$, $R^2$ und $R^3$ | unabhängig voneinander jeweils Wasserstoff, Halogen,$C_1$-$C_6$-Alkyl, Cyclohexyl oder $C_1$-$C_4$-Alkoxy und |
| $R^4$ | Wasserstoff bedeuten und |

der Ring A nicht benzoanelliert ist.

Weiterhin bevorzugt sind Polyazofarbstoffe der Formel I, in der einer der beiden Reste $X^1$ und $X^2$ für Wasserstoff und der andere für Hydroxysulfonyl stehen.

Hervorzuheben sind Aminobenzophenone der Formel I, in der $R^1$, $R^2$ und $R^3$ unabhängig voneinander Wasserstoff, Chlor, $C_1$-$C_4$-Alkyl, dabei insbesondere Methyl oder Ethyl, Methoxy oder Ethoxy bedeuten.

Von besonderer Bedeutung sind Polyazofarbstoffe, die der Formel Ia

(Ia)

entsprechen, in der Z für einen Rest der Formel IIa

(IIa)

steht, worin einer der Reste $X^1$ und $X^2$ Wasserstoff und der andere Hydroxysulfonyl und $R^1$ Chlor, $C_1$-$C_4$-Alkyl, dabei insbesondere Methyl oder Ethyl, Methoxy oder Ethoxy bedeuten und worin die Carbonylgruppe jeweils in para-Position zu $X^1$ oder zur Azogruppe steht.

Von besonderer Bedeutung sind weiterhin Polyazofarbstoffe der Formel Ia, in der Z für einen Rest der Formel IIb oder IIc

(IIb)

(IIc)

steht, worin einer der Reste $X^1$ und $X^2$ Wasserstoff und der andere Hydroxysulfonyl und $R^1$ und $R^2$ unabhängig voneinander Chlor, $C_1$-$C_4$-Alkyl, dabei insbesondere Methyl oder Ethyl, Methoxy oder Ethoxy bedeuten und worin die Carbonylgruppe jeweils in para-Position zu $X^1$ oder zur Azogruppe steht.

Von technischem Interesse sind weiterhin die Kupfer-, Chrom-, Eisen- oder Kobaltkomplexe der Polyazofarbstoffe der Formel I, wobei die entsprechenden Eisen- oder Chromkomplexe besonders hervorzuheben sind.

Die erfindungsgemäßen Polyazofarbstoffe können nach an sich bekannten Methoden erhalten werden.

Beispielsweise kann man ein Aminophenol der Formel III

(III),

in der $R^7$ und $R^8$ und der Ring B jeweils die obengenannte Bedeutung besitzen, diazotieren und mit einer Kupplungskomponente der Formel IV

(IV),

in der $R^5$ und $R^6$ jeweils die obengenannte Bedeutung besitzen, kuppeln, wobei eine Monoazoverbindung der Formel V

(V),

in der $R^5$, $R^6$, $R^7$, $R^8$ und der Ring B jeweils die obengenannte Bedeutung besitzen, resultiert.

Daran anschließend kann man dann ein Aminobenzophenon der Formel II

(II),

in der $R^1$, $R^2$, $R^3$, $R^4$, $X^1$, $X^2$ und der Ring A jeweils die obengenannte Bedeutung besitzen, diazotieren und mit der oben beschriebenen Monoazoverbindung V kuppeln.

Gegebenenfalls kann man dann ein Amin der Formel VI

$Y\text{-}NH_2$ (VI),

in der Y die obengenannte Bedeutung besitzt, diazotieren und mit dem Disazofarbstoff der Formel I (mit q = 0) kuppeln.

Diese beispielhaft beschriebene Herstellungsweise braucht selbstverständlich nicht eingehalten zu werden, d.h. es ist auch möglich, die Kupplungsreihenfolge zu variieren. Beispielsweise kann man zuerst das Aminobenzophenon II diazotieren und mit der Kupplungskomponente IV kuppeln und das resultierende Reaktionsprodukt daran anschließend mit dem Aminophenol III, das vorher diazotiert wurde, kuppeln.

Die Metallisierung, d.h. die Herstellung der jeweiligen Kupfer-, Chrom-, Eisen-, Kobalt- oder Nickelkomplexe der Polyazofarbstoffe I erfolgt ebenfalls nach an sich bekannten Methoden. Beispielsweise durch Behandlung des Polyazofarbstoffs mit den entsprechenden Metallsalzen, z.B. mit Eisen(III)chlorid, Eisen(II)-

sulfat, Kupfersulfat oder Chrom(III)formiat in wäßriger Lösung bei einer Temperatur von 80 bis 105 °C und einem pH-Wert von 4 bis 6.

Bei den Aminophenolen III und der Kupplungskomponente IV handelt es sich um an sich bekannte Verbindungen. Die Aminobenzophenone sind in der älteren Patentanmeldung EP-A-469 399 beschrieben.

Im folgenden seien beispielhaft einige Aminobenzophenone der Formel II sowie geeignete Aminophenolderivate der Formel III aufgeführt.

Aminobenzophenone der Formel II sind z.B.

$SO_3H$ $H_2N$ CO $CH_3$ , $SO_3H$ $H_2N$ CO $C_2H_5$ ,

$SO_3H$ $H_2N$ CO $OCH_3$ , $SO_3H$ $H_2N$ CO $OC_2H_5$ ,

$CH_3$ $H_2N$ CO $SO_3H$ $CH_3$ , $H_2N$ CO $CH_3$ $SO_3H$ $CH_3$ ,

$SO_3H$ $H_2N$ CO $CH_3$ $CH_3$ , $SO_3H$ $H_2N$ CO $CH_3$ ,

$SO_3H$ $H_2N$ CO , $H_2N$ CO Cl $SO_3H$ ,

$SO_3H$ $H_2N$ CO $SO_3H$ $CH_3$ , $SO_3H$ $H_2N$ CO $CH_3$ $CH_3$ $SO_3H$ ,

$SO_3H$ $SO_3H$ $H_2N$ CO $OC_2H_5$ , Cl $H_2N$ CO $CH_3$ , $SO_3H$

$SO_3H$ $CH_3$ $H_2N$ CO $CH_3$ $SO_3H$ , $SO_3H$ $H_2N$ CO Cl , Cl

$SO_3H$ CO $H_2N$ , $HO_3S$ CO $H_2N$ ,

$SO_3H$ $HO_3S$ CO $H_2N$ , $SO_3H$ CO $CH_3$ $H_2N$ $CH_3$ ,

$HO_3S$ CO $C_2H_5$ $H_2N$ , $HO_3S$ CO $CH_3$ $H_2N$ ,

$CH_3$ $SO_3H$ $HO_3S$ CO $H_2N$ $CH_3$ , $CH_3$ $HO_3S$ CO $CH_3$ $H_2N$ ,

$CH_3$ $HO_3S$ CO $H_2N$ $CH_3$ , $CH_3$ CO $CH_3$ , $H_2N$ $SO_3H$

$SO_3H$ CO $OCH_3$ , $H_2N$ $SO_3H$ $CH_3$ $HO_3S$ CO $CH_3$ , $H_2N$ $SO_3H$

$OCH_3$ $HO_3S$ CO $OCH_3$ , $H_2N$ $SO_3H$ $HO_3S$ CO $CH(CH_3)_2$ , $H_2N$

$HO_3S$ CO $CH(CH_3)_2$ , $H_2N$ $SO_3H$ $HO_3S$ CO $C(CH_3)_3$ , $H_2N$

$SO_3H$ $SO_3H$ CO $C_2H_4$ , $H_2N$ $SO_3H$ $HO_3S$ CO $C_5H_{11}(n)$ , $H_2N$

$CH(CH_3)_2$ $SO_3H$ $HO_3S$ CO , $H_2N$ $CH(CH_3)_2$ $CH_3$ $HO_3S$ CO CH , $H_2N$ $C_2H_5$

$HO_3S$, $H_2N$, CO, $SO_3H$, $CH(CH_3)_2$ , $H_2N$, CO, $CH_3$, $SO_3H$, $C_2H_5$ ,

$HO_3S$, $H_2N$, CO, $CH(CH_3)_2$, $CH(CH_3)_2$ , $HO_3S$, $H_2N$, CO, $CH_3$, $C_2H_5$ ,

$SO_3H$, $H_2N$, CO, $SO_3H$, $CH(CH_3)_2$ , $SO_3H$, $H_2N$, CO, $C(CH_3)_3$ ,

$SO_3H$, $H_2N$, CO, $SO_3H$, $C_5H_{11}(n)$ , $SO_3H$, $H_2N$, CO, $CH(CH_3)_2$, $SO_3H$, $CH(CH_3)_2$ ,

$H_2N$, CO, $SO_3H$, $C_2H_4$, $SO_3H$ , $H_2N$, CO, $CH_3$ ,

$H_2N$, CO, $OCH_3$ , $H_2N$, CO, $CH_3$, $CH_3$ ,

Aminophenole der Formel III sind z.B.

OH, $NH_2$, $O_2N$, Cl , Cl, OH, $NH_2$, $NO_2$ , $O_2N$, OH, $NH_2$, $CH_3$ , $O_2N$, OH, $NH_2$, $NO_2$ ,

OH, $NH_2$, $SO_2CH_3$ , OH, $NH_2$, $SO_3H$ , OH, $NH_2$, $SO_2C_2H_5$ , OH, $NH_2$, $SO_2NH_2$ ,

OH, $NH_2$, $SO_2NHC_6H_5$ , OH, $NH_2$, $O_2N$ , $O_2N$, OH, $NH_2$, Cl , OH, $NH_2$, $SO_2N(CH_3)_2$ ,

$O_2N$, OH, $NH_2$, $SO_3H$ , $HO_3S$, OH, $NH_2$, Cl , Cl, OH, $NH_2$, $SO_3H$ , $HO_3S$, OH, $NH_2$, $NO_2$ ,

$HO_3S$, OH, $NH_2$, $CH_3$ , $HO_3S$, OH, $NH_2$, $SO_3H$ , $HO_3S$, OH, $NH_2$ oder

$HO_3S$, OH, $NH_2$, $O_2N$ .

Die erfindungsgemäßen Polyazofarbstoffe eignen sich in vorteilhafter Weise zum Färben von Leder.

Die folgenden Beispiele sollen die Erfindung näher erläutern. Die dort genannten Prozente beziehen sich auf das Gewicht.

Beispiel 1

19,9 g 1-Amino-2-hydroxy-3,5-dinitrobenzol wurden in der üblichen Weise diazotiert und alkalisch auf 11 g Resorcin gekuppelt. Anschließend fügte man zu der Suspension bei pH 8-9 das Diazoniumsalz aus 29,1 g 4-Amino-4'-methylbenzophenon-3'-sulfonsäure hinzu. Nach beendeter Kupplung wurde das Reaktionsgemisch mit Essigsäure auf pH 5 eingestellt, mit 38 g wasserfreiem Eisen-III-chlorid versetzt und bei pH 4-5 ungefähr 3 Stunden auf 90 bis 95 °C erhitzt.

Nach erfolgter Metallisierung wurde der Farbstoff durch Zugabe von Natriumchlorid abgeschieden, isoliert und getrocknet. Der Eisenkomplex der Verbindung der Formel

$$\text{(2-OH-3,5-}(NO_2)_2\text{-C}_6H_2)\text{-N=N-[C}_6H_2(OH)_2\text{]-N=N-C}_6H_4\text{-CO-C}_6H_3(SO_3H)\text{-}CH_3$$

färbt Leder in licht- und naßechten gelbstichig braunen Tönen.

Die in den folgenden Tabellen aufgeführten Farbstoffe werden in analoger Weise erhalten.

Tabelle 1

A—N=N—(HO, OH-Benzol)—N=N—R

| Bsp. Nr. | A | R | Nuance der Färbung der Metallkomplexe auf Leder | | | | |
|---|---|---|---|---|---|---|---|
| | | | Cu | Cr | Co | Ni | Fe |
| 2 | $O_2N$, OH, $O_2N$ | CO, $SO_3H$, $OCH_3$ | rotbraun | | | rotbraun | |
| 3 | $O_2N$, OH, $O_2N$ | CO, $SO_3H$, $OC_2H_5$ | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 4 | Cl, OH, $O_2N$ | CO, $SO_3H$, $CH_3$, $CH_3$ | braun | | | rotbraun | gelbbraun |
| 5 | Cl, OH, $O_2N$ | CO, $SO_3H$, $OC_2H_5$, $SO_3H$ | rotbraun | | braun | | gelbbraun |
| 6 | Cl, OH, Cl | CO, $SO_3H$, $CH_3$ | | braun | | | gelbbraun |
| 7 | OH, $O_2N$ | CO, $SO_3H$, $CH_3$ | | | rotbraun | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 8 | $O_2N$, OH, Cl | $SO_3H$, CO, $C_2H_5$ | | rotbraun | | | gelbbraun |
| 9 | OH, Cl | $SO_3H$, CO, $C_2H_5$ | rotbraun | | rotbraun | | |
| 10 | OH, $HO_3S$ | $SO_3H$, CO, $CH_3$ | rotbraun | | | | gelbbraun |
| 11 | OH, $SO_2NH_2$ | $SO_3H$, CO, $OCH_3$ | | braun | | braun | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 12 | OH<br>$SO_2N(CH_3)_2$ | $SO_3H$<br>CO<br>$CH_3$<br>$SO_3H$ | | | rotbraun | | gelbbraun |
| 13 | OH<br>$SO_2NHC_6H_5$ | $SO_3H$<br>CO<br>$CH_3$<br>$SO_3H$ | | braun | | | gelbbraun |
| 14 | OH<br>$SO_2CH_3$ | $CH_3$<br>CO<br>$CH_3$<br>$SO_3H$<br>$SO_3H$ | rotbraun | | rotbraun | | gelbbraun |
| 15 | $O_2N$<br>OH<br>$O_2N$ | $SO_3H$<br>CO<br>$CH_3$ | | rotbraun | rotbraun | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 16 | $O_2N$, OH, $O_2N$ | CO, $SO_3H$, $CH_3$ | rotbraun | rotbraun | | | gelbbraun |
| 17 | $HO_3S$, OH, $O_2N$ | CO, $SO_3H$, $CH_3$ | rotbraun | | | | gelbbraun |
| 18 | $HO_3S$, OH, Cl | CO, $CH_3$, $CH_3$, $SO_3H$ | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 19 | OH, $HO_3S$ | $CH_3$, CO, $SO_3H$ | | | | rotbraun | |
| 20 | OH, $HO_3S$, $O_2N$ | $CH_3$, CO, $SO_3H$, $CH_3$ | rotbraun | | | braun | |
| 21 | $HO_3S$, OH, $CH_3$ | $SO_3H$, CO, $CH_3$ | | rotbraun | | | braun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 22 | $HO_3S$, OH, $HO_3S$ | CO, $CH_3$ | | | rotbraun | | braun |
| 23 | $O_2N$, OH, $HO_3S$ | CO, $OCH_3$ | rotbraun | | | | gelbbraun |
| 24 | $HO_3S$, OH, $O_2N$ | CO, $CH_3$, $CH_3$ | | rotbraun | | | gelbbraun |
| 25 | $O_2N$, OH, $O_2N$ | CO, $SO_3H$, $CH_3$, $SO_3H$ | rotbraun | | | rotbraun | |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 26 | $O_2N$, OH, $O_2N$ | $HO_3S$, CO, $CH_3$, $SO_3H$, $CH_3$ | rotbraun | | | | gelbbraun |
| 27 | OH, $SO_2NH_2$ | CO, $SO_3H$, $CH_3$ | | rotbraun | | | gelbbraun |
| 28 | OH, $SO_2N(CH_3)_2$ | $HO_3S$, CO, $SO_3H$, $CH_3$, $CH_3$ | | | rotbraun | | gelbbraun |

Tabelle 2

A—N=N—[C₆H₂(OH)(NH₂)]—N=N—R

| Bsp. Nr. | A | R | Nuance der Färbung der Metallkomplexe auf Leder | | | | |
|---|---|---|---|---|---|---|---|
| | | | Cu | Cr | Co | Ni | Fe |
| 29 | $O_2N$, OH (Ring-Substituenten) | $SO_3H$, CO, $CH_3$ (Ring-Substituenten) | rotbraun | | | | gelbbraun |
| 30 | $O_2N$, OH (Ring-Substituenten) | $SO_3H$, CO, $CH_3$ (Ring-Substituenten) | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 31 | Cl, OH, $O_2N$ | $SO_3H$, CO, $SO_3H$, $CH_3$ | | rotbraun | | rotbraun | |
| 32 | OH, $O_2N$ | CO, $SO_3H$, $CH_3$ | rotbraun | | rotbraun | | braun |
| 33 | OH, $H_2NSO_2$ | $HO_3S$, CO, $SO_3H$, $OCH_3$ | | rotbraun | | | gelbbraun |
| 34 | Cl, OH, $HO_3S$ | CO, $SO_3H$, $CH_3$ | | rotbraun | | | braun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 35 | $HO_3S$, OH, $O_2N$ | —C₆H₄—CO—C₆H(CH₃)₂(SO₃H) ($CH_3$, $SO_3H$, $CH_3$) | rotbraun | | rotbraun | | |
| 36 | $HO_3S$, OH, $CH_3$ | —C₆H₄—CO— ($SO_3H$, $OCH_3$) | | rotbraun | | | braun |
| 37 | $O_2N$, OH, $O_2N$ | $HO_3S$, CO, $CH_3$, $CH_3$, $CH_3$ | rotbraun | | | | gelbbraun |
| 38 | $O_2N$, OH, $O_2N$ | $HO_3S$—, CO, $SO_3H$, $CH_3$, $CH_3$ | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 39 | Cl, OH, $O_2N$ | $HO_3S$, CO, $SO_3H$, $CH_3$ | rotbraun | | | rotbraun | |
| 40 | OH, $SO_2NHC_6H_5$ | $SO_3H$, CO, $SO_3H$, $CH_3$ | rotbraun | | | | gelbbraun |
| 41 | OH, $O_2N$ | $HO_3S$, CO, $SO_3H$, $CH_3$ | | rotbraun | | | gelbbraun |
| 42 | $HO_3S$, OH, $O_2N$ | CO, $CH_3$, $SO_3H$, $CH_3$ | | | rotbraun | | gelbbraun |

Tabelle 3

$A-N=N-C_6H_2(NH_2)_2-N=N-R$

| Bsp. Nr. | A | R | Nuance der Färbung der Metallkomplexe auf Leder | | | | |
|---|---|---|---|---|---|---|---|
| | | | Cu | Cr | Co | Ni | Fe |
| 43 | $O_2N$, OH, $O_2N$ | CO, $SO_3H$, $CH_3$ | rotbraun | | | | gelbbraun |
| 44 | $HO_3S$, OH, $O_2N$ | CO, $SO_3H$, $CH_3$ | | rotbraun | | | braun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 45 | $HO_3S$, OH, Cl | CO, $SO_3H$, $CH_3$ | | | | rotbraun | |
| 46 | OH, $O_2N$ | $HO_3S$, CO, $SO_3H$, $CH_3$ | rotbraun | | | | |
| 47 | OH, $SO_2NH_2$ | CO, $SO_3H$, $CH_3$, $SO_3H$ | | braun | | | gelbbraun |
| 48 | Cl, OH, $O_2N$ | CO, $SO_3H$, $CH_3$, $SO_3H$ | | | rotbraun | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 49 | $H_3C$, OH, $O_2N$ | $SO_3H$, CO, $OCH_3$, $SO_3H$ | rotbraun | | | rotbraun | |
| 50 | OH, $CH_3SO_2$ | $SO_3H$, CO, $OC_2H_5$, $SO_3H$ | | rotbraun | | | gelbbraun |
| 51 | OH, $HO_3S$ | CO, $SO_3H$, $CH_3$ | rotbraun | rotbraun | | | gelbbraun |
| 52 | $HO_3S$, OH, $HO_3S$ | CO | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 53 | OH, $H_2NSO_2$ | $SO_3H$, CO, $CH_3$, $SO_3H$, $CH_3$ | rotbraun | | | rotbraun | gelbbraun |
| 54 | $O_2N$, OH, $HO_3S$ | $SO_3H$, CO, $CH_3$, $CH_3$ | rotbraun | | | | gelbbraun |
| 55 | OH | $SO_3H$, CO, $SO_3H$, $CH_3$ | | rotbraun | | | gelbbraun |

| Bsp. Nr. | A | R | Nuance der Färbung der Metallkomplexe auf Leder | | | | |
|---|---|---|---|---|---|---|---|
| | | | Cu | Cr | Co | Ni | Fe |
| 56 | OH, $HO_3S$ | $SO_3H$, $CH_3$, CO | | | rotbraun | | braun |
| 57 | OH, $O_2N$, $O_2N$ | CO, $SO_3H$, $SO_3H$ | | | | | braun |

Beispiel 58

19,9 g 1-Amino-2-hydroxy-3,5-dinitrobenzol wurden in der üblichen Weise diazotiert und alkalisch auf 11 g Resorcin gekuppelt. Anschließend fügte man zu der Suspension bei pH 8-9 das Diazoniumsalz aus 29,1 g

4-Amino-4'-methylbenzophenon-3'-sulfonsäure hinzu. Nachdem die Bildung des Disazofarbstoffes beendet war, gab man die Diazoverbindung aus 21,8 g 1-Amino-4-nitrobenzol-2-sulfonsäure in der Weise hinzu, daß die Kupplung bei einem pH-Wert zwischen 6 und 7 erfolgte. Nach beendeter Kupplung wurde das Reaktionsgemisch mit Essigsäure auf pH 5 eingestellt und mit wasserfreiem Eisen-III-chlorid analog Beispiel 1 komplexiert.

Nach erfolgter Metallisierung wurde der Farbstoff durch Zugabe von Natriumchlorid abgeschieden, isoliert und getrocknet. Der Eisenkomplex der Verbindung der Formel

$O_2N$ OH HO OH $SO_3H$ N=N N=N CO $CH_3$ $O_2N$ $SO_3H$ N=N $NO_2$

färbt vegetabilisch/synthetisch nachgegerbtes Chromrindleder in licht- und naßechten braunen Tönen.

Die in der folgenden Tabelle aufgeführten Farbstoffe werden in analoger Weise erhalten.

Tabelle 4

| Bsp. Nr. | R | X | Nuance des Fe-Komplexes auf Leder |
|---|---|---|---|
| 59 | | | gelbbraun |
| 60 | | | braun |
| 61 | | | gelbbraun |
| 62 | | | braun |
| 63 | | | rotbraun |

| Bsp. Nr. | R | X | Nuance des Fe-Komplexes auf Leder |
|---|---|---|---|
| 64 | $CH_3$ $SO_3H$ CO $CH_3$ | Cl $SO_3H$ | braun |
| 65 | $SO_3H$ CO $CH_3$ $SO_3H$ | $NO_2$ $SO_3H$ | braun |
| 66 | $SO_3H$ CO $OCH_3$ | $SO_3H$ | braun |
| 67 | $SO_3H$ CO $OC_2H_5$ $SO_3H$ | | braun |

**Patentansprüche**

1. Polyazofarbstoffe der Formel I

R7
R8
B
OH
R5
N=N
R6
N=N
X1
CO
R3
R2
R1
A
X2
R4
p
N=N—Y
q
(I)


in freier Form oder als Kupfer-, Chrom-, Eisen-, Kobalt- oder Nickelkomplex, wobei

p 1 bis 2,

q 0 bis 1,

$X^1$ Wasserstoff oder Hydroxysulfonyl,
$X^2$ Wasserstoff, Hydroxysulfonyl, Hydroxysulfonylphenyl, Hydroxysulfonylbenzyl oder Hydroxysulfonylphenylethyl,
$R^1$, $R^2$ und $R^3$ gleich oder verschieden sind und unabhängig voneinander jeweils Wasserstoff, Halogen, $C_1$-$C_{12}$-Alkyl, Cyclohexyl oder $C_1$-$C_4$-Alkoxy
R4 Wasserstoff, $C_1$-$C_4$-Alkyl, $C_1$-$C_4$-Alkoxy oder Chlor,
$R^5$ und $R^6$ gleich oder verschieden sind und unabhängig voneinander jeweils Hydroxy oder Amino,
$R^7$ Wasserstoff, $C_1$-$C_4$-Alkyl, Halogen, Nitro, Hydroxysulfonyl, Sulfamoyl, $C_1$-$C_4$-Mono- oder -Dialkylsulfamoyl, Phenylsulfamoyl oder $C_1$-$C_4$-Alkylsulfonyl,
$R^8$ Wasserstoff, Halogen, Nitro oder Hydroxysulfonyl und
Y einen Rest der Formel

worin
$R^9$ für Wasserstoff, Hydroxy, Halogen, Nitro oder Hydroxysulfonyl,
$R^{10}$ für Wasserstoff, Halogen, Nitro oder Hydroxysulfonyl und
$R^{11}$ für Wasserstoff, $C_1$-$C_4$-Alkyl, $C_1$-$C_4$-Alkoxy oder Hydroxysulfonyl stehen, bedeuten,
der Ring A gegebenenfalls benzoanelliert ist und ein benzoanellierter Ring A durch $C_2H_4$ verbrückt sein kann und die Ringe B und C jeweils durch einen gegebenenfalls durch Nitro oder Hydroxysulfonyl substituierten Benzoring anelliert sein können.

**2.** Polyazofarbstoffe nach Anspruch 1, dadurch gekennzeichnet, daß
q 0,
$X^1$ Wasserstoff oder Hydroxysulfonyl,
$X^2$ Wasserstoff oder Hydroxysulfonyl,
$R^1$, $R^2$ und $R^3$ unabhängig voneinander jeweils Wasserstoff, Halogen, $C_1$-$C_6$-Alkyl, Cyclohexyl oder $C_1$-$C_4$-Alkoxy und
$R^4$ Wasserstoff bedeuten und
der Ring A nicht benzoanelliert ist.

**3.** Polyazofarbstoffe nach Anspruch 1, dadurch gekennzeichnet, daß einer der beiden Reste $X^1$ and $X^2$ Wasserstoff und der andere Hydroxysulfonyl bedeuten.

**4.** Verwendung der Polyazofarbstoffe gemäß Anspruch 1 zum Färben von Leder.